# EUROPÄISCHE PATENTSCHRIFT

(11) **EP 1 422 908 B1**
(45) Veröffentlichungstag und Bekanntmachung des Hinweises auf die Patenterteilung: **30.11.2005**
(21) Anmeldenummer: 03103974.6
(22) Anmeldetag: 27.10.2003
(51) Int. Cl.: H04L 29/06

(54) **Verfahren und Anordnung zum verschlüsselten Übertragen von Kommunikationsdatenströmen über ein paketorientiertes Kommunikationsnetz**
Method and apparatus for transmitting encrypted data streams over a packet oriented network
Procédé et appareil pour la transmision de flux de données chiffrées sur un reséau orienté paquet

(30) Priorität: 25.11.2002 DE 10254906
(43) Veröffentlichungstag der Anmeldung: 26.05.2004
(73) Patentinhaber: SIEMENS AKTIENGESELLSCHAFT, 80333 München (DE)
(72) Erfinder: Corell, Christian, 81377 München (DE); Klug, Karl, 83714 Miesbach (DE)

(56) Entgegenhaltungen:
- EP-A- 1 189 397
- WO-A-01/31863
- SUBBIAH B ET AL: "RTP PAYLOAD MULTIPLEXING BETWEEN IP TECHNOLOGY GATEWAYS" 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999, IEEE GLOBAL TELECOMMUNICATIONS CONFERENCE, NEW YORK, NY: IEEE, US, Bd. 2, 5. Dezember 1999 (1999-12-05), Seiten 1121-1127, XP001016890 ISBN: 0-7803-5797-3
- CALVERT K L ET AL: "Building a Programmable Multiplexing Service Using Concast" PROCEEDINGS 2000 INTERNATIONAL CONFERENCE ON NETWORK PROTOCOLS, PROCEEDINGS OF ICNP 2000. 8TH IEEE CONFERENCE ON NETWORK PROTOCOLS, [Online] 14. - 17. November 2000, Seiten 230-239, XP002272497 Osaka, Japan ISBN: 0-7695-0921-5 Gefunden im Internet: <URL:http://www.ieee-icnp.org/2000/papers/ 2000-21.pdf> [gefunden am 2004-03-03]
- ROSEN E C ET AL: "Use of PE-PE IPsec in RFC2547 VPNs" INTERNET DRAFT, [Online] August 2002 (2002-08), Seiten 1-17, XP002272498 Gefunden im Internet: <URL:http://www.watersprings.org/pub/id/dr aft-ietf-ppvpn-ipsec-2547-02.txt> [gefunden am 2004-03-03]

## Beschreibung

In zeitgemäßen Kommunikationssystemen werden Kommunikationsverbindungen, insbesondere Echtzeitverbindungen, z.B. zur Sprach-, Video- und/oder Multimediakommunikation, in zunehmendem Maße auch über paketorientierte Kommunikationsnetze, wie z.B. lokale Netze (local area networks) oder Weitverkehrsnetze (wide area networks) geführt. Hierfür werden meist Übertragungsprotokolle aus der TCP/IP-Protokollfamilie (IP: Internet Protocol, TCP: Transmission Control Protocol) verwendet. Eine mittels des Internetprotokolls, im Folgenden kurz als IP bezeichnet, übertragene Kommunikationsverbindung, z.B. zur Sprach-, Video- und/oder Multimediakommunikation, wird häufig auch als VoIP-Verbindung (VoIP: Voice/Video over Internet Protocol) bezeichnet.

VoIP-Verbindungen werden häufig über offene Weitverkehrsnetze, wie z.B. das Internet geführt, wo an der Übertragung beteiligte Netzknoten im Prinzip auf die im Rahmen der VoIP-Kommunikationsverbindungen übertragenen IP-Datenpakete zugreifen können. Um dennoch eine Vertraulichkeit von VoIP-Kommunikationsverbindungen zu gewährleisten, können VoIP-Kommunikationsdatenströme verschlüsselt übertragen werden.

Für eine verschlüsselte Übertragung von IP-basierten, d.h. als eine Folge von IP-Datenpaketen vorliegenden Kommunikationsdatenströmen wird üblicherweise das sogenannte IPSec-Protokoll (Internet Protocol Security) verwendet. Durch das IPSec-Protokoll wird jedes im Rahmen einer zu sichernden Kommunikationsverbindung zu übertragende IP-Datenpaket einzeln verschlüsselt und das verschlüsselte IP-Datenpaket übertragen.

Die Verschlüsselung eines VoIP-Datenpakets erfordert jedoch einen verhältnismäßig hohen Rechenaufwand. In der Regel ist deshalb die Maximalanzahl von VoIP-Paketen, die pro Zeiteinheit durch eine Übertragungsbaugruppe verschlüsselt werden kann, durch deren verfügbare Prozessorleistung begrenzt. In der Praxis ist die Anzahl von verschlüsselten VoIP-Verbindungen, die über eine Übertragungsbaugruppe parallel geführt werden können, aufgrund des hohen Verschlüsselungsaufwandes wesentlich geringer als die entsprechende Anzahl unverschlüsselter VoIP-Verbindungen. So haben beispielsweise Tests ergeben, dass eine für 120 unverschlüsselte parallele VoIP-Verbindungen ausgelegte, dem Stand der Technik entsprechende Übertragungsbaugruppe nur 10 VoIP-Verbindungen parallel verschlüsseln kann.

Subbiah B et al, "RTP Payload Multiplexing between IP Telephony Gateways", 1999 IEEE Global Telecommunications, Globecom'99, 5. Dezember 1999, Seiten 1121-1127, ISBN: 0-7803-5797-3, offenbart die Verwendung von so genannten "mini-packets" zum Zusammenfassen von zu parallelen RTP-Kommunikationsdatenströmen gehörenden IP-Datenpaketen. Die so entstandenen Sammel-Datenpakete werden verschlüsselt übertragen. Das IP-Protokoll wird jedoch nicht beibehalten. Daher ist eine aufwändige Unterscheidung von zusammengefassten und nicht zusammengefassten IP-Datenpaketen bei der Verschlüsselung erforderlich.

Es ist Aufgabe der vorliegenden Erfindung ein Verfahren sowie eine Anordnung anzugeben, die ein verschlüsseltes Übertragen einer gemessen am Stand der Technik höheren Anzahl paralleler IP-Kommunikationsdatenströme erlauben.

Gelöst wird diese Aufgabe durch ein Verfahren mit den Merkmalen des Patentanspruchs 1 sowie durch eine Übertragungseinrichtung mit den Merkmalen des Patentanspruchs 5.

Zum verschlüsselten Übertragen von jeweils als Folge von IP-Datenpaketen vorliegenden Kommunikationsdatenströmen über ein paketorientiertes Kommunikationsnetz, wie z.B. ein lokales Netz oder ein Weitverkehrsnetz, werden durch einen Sammelpaketerzeuger Sammel-IP-Datenpakete gebildet, die jeweils mehrere IP-Datenpakete verschiedener Kommunikationsdatenströme enthalten. Ein jeweiliges Sammel-IP-Datenpaket wird durch ein - vorzugsweise standardisiertes - Verschlüsselungsmodul zum Verschlüsseln von IP-Datenpaketen verschlüsselt. Die verschlüsselten Sammel-IP-Datenpakete werden dann über das Kommunikationsnetz übertragen.

Durch das Zusammenfassen mehrerer IP-Datenpakete zu einem zu verschlüsselnden Sammel-IP-Datenpaket kann der zum Verschlüsseln benötigte Rechenaufwand erheblich verringert werden, da die Verschlüsselung des Sammel-IP-Datenpaketes weniger aufwendig ist als eine separate Verschlüsselung der einzelnen enthaltenen IP-Datenpakete. Diese Rechenzeiteinsparung ist dadurch begründet, dass der Verschlüsselungsaufwand für ein IP-Datenpaket sich aufteilt in einen Schritt zum Vorbereiten der Verschlüsselung, dessen Rechenaufwand unabhängig von der Größe des IP-Datenpakets ist, und einen Schritt zum Durchführen der Verschlüsselung, dessen Rechenaufwand näherungsweise proportional zur Größe des IP-Datenpakets ist. Bei der Verschlüsselung eines Sammel-IP-Datenpakets muss das Vorbereiten der Verschlüsselung nur einmal durchgeführt werden, nämlich für das Sammel-IP-Datenpaket, und nicht mehrfach, wie bei separater Verschlüsselung jedes einzelnen enthaltenen IP-Datenpakets. Bei üblichen VoIP-Kommunikationsverbindungen ist die erzielbare Rechenzeitersparnis verhältnismäßig hoch, da VoIP-Datenpakete relativ klein sind und demzufolge das Vorbereiten der Verschlüsselung eines solchen IP-Datenpakets oft länger dauert, als die Durchführung der Verschlüsselung selbst.

Durch die erhebliche Verringerung des Gesamtrechenaufwandes können mit Hilfe der Erfindung bei vorgegebener Rechenleistung wesentlich mehr Kommunikationsdatenströme parallel verschlüsselt und übertragen werden.

Vorteilhafte Ausführungsformen der Erfindung sind in den abhängigen Ansprüchen angegeben.

Gemäß einer vorteilhaften Ausführungsform der Erfindung können die Sammel-IP-Datenpakete mittels eines verschlüsselnden Tunneling-Verfahrens auf der Netzwerkschicht, d.h. Schicht 3 des OSI-Referenzmodells übertragen werden. Das Verschlüsselungsmodul kann hierzu ein Einkapselmodul aufweisen zum Einkapseln von im Verschlüsselungsmodul verschlüsselten Daten eines ersten IP-Datenpakets in ein zweites IP-Datenpaket. Im Vergleich zu auf Schicht 2 des OSI-Referenzmodells aktiven Protokollen, wie z.B. PPTP, L2F oder L2TP, gilt ein auf der Netzwerkschicht aktives Verschlüsselungsprotokoll als wesentlich sicherer.

Weiterhin kann - vorzugsweise durch eine Adressvergleichseinrichtung - ermittelt werden, welche der Kommunikationsdatenströme ein gemeinsames Übertragungsziel aufweisen. Unter einem Übertragungsziel sei hierbei auch ein Übertragungszwischenziel verstanden. Ein jeweiliges Sammel-IP-Datenpaket kann dann ausschließlich aus IP-Datenpaketen von Kommunikationsdatenströmen mit gemeinsamem Übertragungsziel gebildet werden.

Darüber hinaus kann ein jeweiliges Sammel-IP-Datenpaket aus innerhalb eines vorgegebenen Zeitintervalls eintreffenden IP-Datenpaketen verschiedener Kommunikationsdatenströme gebildet werden. Zum Vorgeben des Zeitintervalls kann ein Zeitgeber vorgesehen sein. Durch das Vorgeben eines Zeitintervalls, innerhalb dessen in einem einzelnen Sammel-IP-Datenpaket zu übertragende IP-Datenpakete eintreffen müssen, kann die Übertragungsverzögerung für die Kommunikationsdatenströme begrenzt werden. Vorzugsweise können zu einem jeweiligem Zeitpunkt in einem Eingangsregister parallel vorliegende IP-Datenpakete zu einem Sammel-IP-Datenpaket zusammengefasst werden.

Ein Ausführungsbeispiel der Erfindung wird nachfolgend anhand der Zeichnung näher erläutert.

Dabei zeigen jeweils in schematischer Darstellung:
Figur 1 zwei über ein paketorientiertes Kommunikationsnetz gekoppelte Kommunikationsanlagen und
Figur 2 eine Übertragungseinrichtung zum verschlüsselten Übertragen von Kommunikationsdatenströmen.

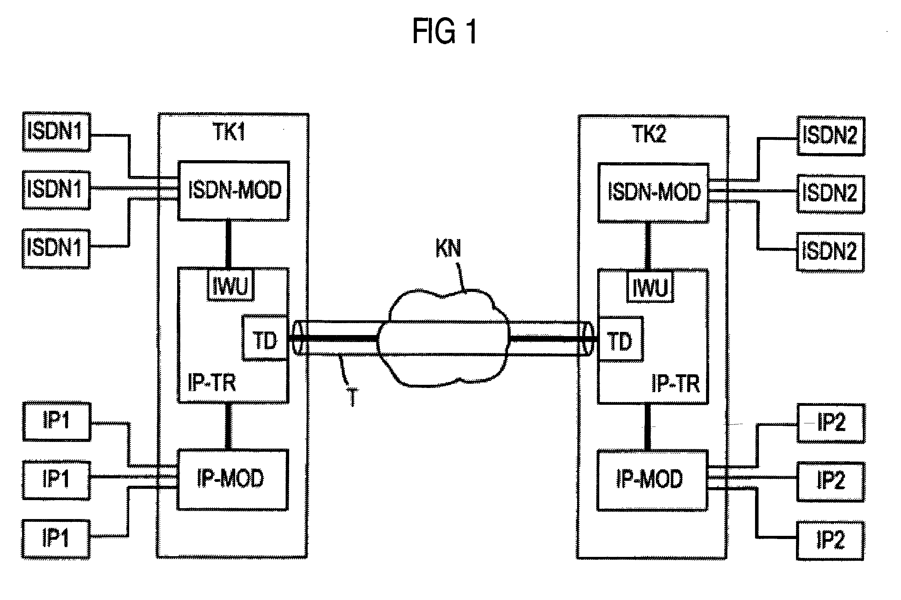

In Figur 1 sind zwei über ein paketorientiertes Kommunikationsnetz KN, beispielsweise ein lokales Netz oder ein Weitverkehrsnetz wie das Internet, gekoppelte Telekommunikationsanlagen TK1 und TK2 schematisch dargestellt. Für das vorliegende Ausführungsbeispiel sei angenommen, dass die Telekommunikationsanlagen TK1 und TK2 sowohl leitungsorientierte Kommunikation als auch paketorientierte VoIP-Kommunikation unterstützen.

An die Telekommunikationsanlage TK1 sind ISDN-Telefone ISDN1 (ISDN: Integrated Services Digital Network) über eine ISDN-Teilnehmerbaugruppe ISDN-MOD der Telekommunikationsanlage TK1 sowie IP-Endeinrichtungen IP1 über eine IP-Teilnehmerbaugruppe IP-MOD der Telekommunikationsanlage TK1 angeschlossen. Analog dazu sind ISDN-Telefone ISDN2 an eine ISDN-Teilnehmerbaugruppe ISDN-MOD der Telekommunikationsanlage TK2 sowie IP-Endeinrichtungen IP2 an eine IP-Teilnehmerbaugruppe IP-MOD der Telekommunikationsanlage TK2 angeschlossen. Die IP-Endeinrichtungen IP1 und IP2 sind paketorientierte VoIP-Kommunikationsendeinrichtungen, wie z.B. Endgeräte zur IP-basierten Sprach-, Video-, Fax-, Daten- und/oder Multimediakommunikation oder Personalcomputer oder darauf ablaufende Kommunikationsanwendungen oder Kommunikatikonsclients. Eine derartige IP-Endeinrichtung zur Sprachkommunikation wird häufig auch als IP-Telefon bezeichnet.

Die Telekommunikationsanlagen TK1 und TK2 weisen jeweils eine IP-Trunking-Baugruppe IP-TR auf, über die die Telekommunikationsanlagen TK1 und TK2 an das paketorientierte Kommunikationsnetz KN angekoppelt sind. An die IP-Trunking-Baugruppe IP-TR ist jeweils die IP-Teilnehmerbaugruppe IP-MOD sowie die ISDN-Teilnehmerbaugruppe ISDN-MOD angeschlossen. Letztere ist über ein Paketumsetzmodul IWU der IP-Trunking-Baugruppe IP-TR an diese angekoppelt. Das Paketumsetzmodul IWU dient zum Um setzen zwischen einem leitungsorientierten, hier ISDNbasierten Übertragungsprotokoll der ISDN-Telefone ISDN1 bzw. ISDN2 und einem paketorientierten, hier IP-basierten Übertragungsprotokoll. Durch das Paketumsetzmodul IWU werden ISDN-Kommunikationsdatenströme jeweils in einen aus einer Folge von IP-Datenpaketen bestehenden Kommunikationsdatenstrom umgesetzt.

Die IP-Trunking-Baugruppen IP-TR weisen weiterhin jeweils eine Übertragungseinrichtung TD auf, über die sie an das Kommunikationsnetz KN angekoppelt sind. Die Übertragungseinrichtungen TD dienen zum verschlüsselten Übertragen von IP-basierten Kommunikationsdatenströmen über das paketorientierte Kommunikationsnetz KN und stellen einen gesicherten, über das Kommunikationsnetz KN führenden Übertragungstunnel T für VoIP-Datenpakete bereit.

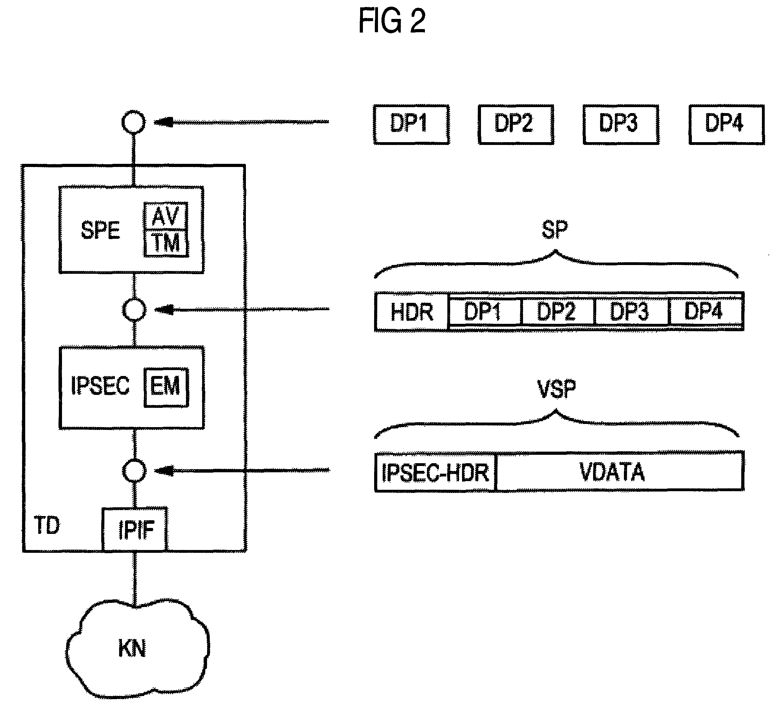

Figur 2 zeigt die Übertragungseinrichtung TD in detaillierterer Darstellung. Die Übertragungseinrichtung TD weist einen Sammelpaketerzeuger SPE mit einer Adressvergleichseinrichtung AV und einem Zeitgeber TM, ein Verschlüsselungsmodul IPSEC mit einem Einkapselmodul EM sowie eine IP-Schnittstelle IPIF zum Kommunikationsnetz KN auf. Der Sammelpaketerzeuger SPE ist extern mit der IP-Teilnehmerbaugruppe IP-MOD und über das Paketumsetzmodul IWU mit der ISDN-Teilnehmerbaugruppe ISDN-MOD, sowie intern mit dem Verschlüsselungsmodul IPSEC gekoppelt. Das Verschlüsselungsmodul IPSEC ist wiederum über die IP-Schnittstelle IPIF an das Kommunikationsnetz KN gekoppelt.

Das Verschlüsselungsmodul IPSEC dient zum Verschlüsseln einzelner IP-Datenpakete und stellt für diese den gesicherten Übertragungstunnel T auf Schicht 3 des OSI-Referenzmodells bereit. Im vorliegenden Ausführungsbeispiel ist das Verschlüsselungsmodul IPSEC durch einen standardisierten IPSec-Protokollstapel (IPSec: Internet Protocol Security) realisiert. Im Vergleich zu auf Schicht 2 des OSI-Referenzmodells aktiven Protokollen, wie z.B. PPTP, L2F oder L2TP, gilt das IPSec-Protokoll als wesentlich sicherer und erlaubt einen Aufbau sicherer Extranets.

Im Folgenden sei der Fall betrachtet, dass im Rahmen verschiedener parallel bestehender Kommunikationsverbindungen, mehrere von den IP-Endeinrichtungen IP1 oder den ISDN-Telefonen ISDN1 ausgehende VoIP-Kommunikationsdatenströme, z.B. Sprach-, Video- und/oder Multimediadatenströme, parallel über das Kommunikationsnetz KN in Echtzeit oder Quasiechtzeit übertragen werden. Die Kommunikationsdatenströme werden dabei dem Sammelpaketerzeuger SPE der Übertragungseinrichtung TD, gegebenenfalls nach Umsetzung durch das Paketumsetzmodul IWU, jeweils als Folge einzelner VoIP-Datenpakete zugeleitet.

Es sei angenommen, dass innerhalb eines Zeitintervalls, das kurz gegenüber dem mittleren Zeitabstand aufeinanderfolgender IP-Datenpakete desselben Kommunikationsdatenstroms ist, vier VoIP-Datenpakete DP1, DP2, DP3 und DP4, die verschiedenen Kommunikationsdatenströmen angehören, beim Sammelpaketerzeuger SPE eintreffen und parallel in einem Eingangsspeicher vorliegen. Das Zeitintervall wird durch den Zeitgeber TM vorgegeben bzw. überwacht. Durch Prüfung der IP-Zieladressen der IP-Datenpakete DP1,...,DP4 ermittelt die Adressvergleichseinrichtung AV, welche der IP-Datenpakete DP1,...,DP4 ein gemeinsames Übertragungsziel aufweisen. Im vorliegenden Ausführungsbeispiel weisen alle IP-Datenpakete DP1,...,DP4 das selbe Übertragungszwischenziel auf, nämlich die Telekommunikationsanlage TK2. Infolgedessen werden durch den Sammelpaketerzeuger SPE alle diese IP-Datenpakete DP1,...,DP4 in einem Sammel-IP-Datenpaket SP zusammengefasst, das dem Verschlüsselungsmodul IPSEC übergeben wird.

Durch die Zusammenfassung von parallel vorliegenden - vorzugsweise allen parallel vorliegenden - IP-Datenpaketen verschiedener Kommunikationsdatenströme, kann eine wesentliche Verzögerung der Kommunikationsdatenströme vermieden werden.

Eine wesentliche Verzögerung würde auftreten, wenn zum Bilden eines nur einem einzigen Kommunikationsdatenstrom zugeordneten Sammel-IP-Datenpakets auf aufeinanderfolgende IP-Datenpakete dieses Kommunikationsdatenstroms gewartet werden müsste.

Das Sammel-IP-Daten-paket SP ist ein gewöhnliches IP-Datenpaket gemäß Internetprotokoll mit einem IP-Paketkopf HDR und einem Nutzdatenbereich, in den die einzelnen IP-Datenpakete DP1,...,DP4 als ganzes, d.h. inklusive deren jeweiligem Paketkopf, eingefügt sind. Das Einfügen der vollständigen IP-Datenpakete DP1,...,DP4 ist insofern vorteilhaft, als bei der nachfolgenden Verschlüsselung auch die Paketköpfe verschlüsselt werden, so dass keine Information über Ursprung, Ziel oder Verbindungsparameter der einzelnen Kommunikationsdatenströme von Unberechtigten lesbar ist.

Im Verschlüsselungsmodul IPSEC wird der Dateninhalt des Sammel-IP-Datenpakets SP verschlüsselt und der verschlüsselte Dateninhalt durch das Einkapselmodul EM in ein verschlüsseltes Sammel-IP-Datenpaket VSP eingekapselt. Das verschlüsselte Sammel-IP-Datenpaket VSP wird dann über die IP-Schnittstelle IPIF in das Kommunikationsnetz KN übertragen.

Im vorliegenden Ausführungsbeispiel ist das verschlüsselte Sammel-IP-Datenpaket VSP ein Datenpaket gemäß Internetprotokoll mit einem IP-Paketkopf IPSEC-HDR und einem verschlüsselte Daten VDATA enthaltenden Nutzdatenbereich. In den verschlüsselten Daten VDATA sind die IP-Datenpakete DP1,...,DP4 verschlüsselt.

Der zum Verschlüsseln des Sammel-IP-Datenpakets SP erforderliche Rechenaufwand ist in der Regel wesentlich geringer als der Rechenaufwand, der zum separaten Verschlüsseln der einzelnen IP-Datenpakete DP1,...,DP4 erforderlich wäre. Beim Verschlüsseln des Sammel-IP-Datenpakets SP muss nämlich das rechenaufwendige Vorbereiten der Verschlüsselung nur einmal durchgeführt werden, und nicht mehrfach wie bei separater Verschlüsselung jedes einzelnen IP-Datenpakets DP1,...,DP4. In der Praxis enthalten VoIP-Datenpakete meist nur verhältnismäßig wenige Nutzdaten, um die Übertragungsverzögerung zu verringern. So enthalten z.B. VoIP-Datenpakete, die durch Verwendung von Codecs gemäß den ITU-T-Empfehlungen G.729 oder G.723 entstehen, jeweils nur 20 Byte Sprachdaten. Für derartig kurze Datenpakete dauert das Vorbereiten der Verschlüsselung etwa doppelt so lange wie das Durchführen der Verschlüsselung selbst. Werden - wie im vorliegenden Ausführungsbeispiel - vier VoIP-Datenpakete DP1,...,DP4 zu einem Sammel-IP-Datenpaket, hier SP, zusammengefasst, so lässt sich dreimal der Rechenaufwand für das Vorbereiten der Verschlüsselung einsparen. Die Verschlüsselung des einen Sammel-IP-Datenpakets SP erfordert somit nur noch halb so viel Rechenaufwand wie eine getrennte Verschlüsselung der vier einzelnen VoIP-Datenpakete DP1,...,DP4. Bei gleichbleibender Rechenleistung der Übertragungseinrichtung TD verdoppelt sich somit die Anzahl der parallel verschlüsselbaren Kommunikationsdatenströme.

Die über das Kommunikationsnetz KN übertragenen, verschlüsselten Sammel-IP-Datenpakete VSP werden am Übertragungszwischenziel TK2 wieder durch deren Verschlüsselungsmodul entschlüsselt. Aus dem entschlüsselten Sammel-IP-Datenpaket werden schließlich die einzelnen IP-Datenpakete DP1,...,DP4 entpackt und gemäß deren individueller IP-Zieladresse weitervermittelt.

## Patentansprüche

1. Verfahren zum verschlüsselten Übertragen von jeweils als Folge von IP-Datenpaketen (DP1,...,DP4) vorliegenden Kommunikationsdatenströmen über ein paketorientiertes Kommunikationsnetz (KN), bei dem
a) Sammel-IP-Datenpakete (SP) als internetprotokollgemäße, jeweils mit einem IP-Paketkopf (HDR) versehene Datenpakete gebildet werden, die jeweils mehrere IP-Datenpakete (DP1,...,DP4) mit deren jeweiligem Paketkopf enthalten, wobei die enthaltenen IP-Datenpakete (DP1,...,DP4) verschiedenen Kommunikationsdatenströmen angehören,
b) ein jeweiliges Sammel-IP-Datenpaket (SP) durch ein Verschlüsselungsmodul zum Verschlüsseln von IP-Datenpaketen verschlüsselt wird, und
c) die verschlüsselten Sammel-IP-Datenpakete (VSP) über das paketorientierte Kommunikationsnetz (KN) übertragen werden.

2. Verfahren nach Anspruch 1,
**dadurch gekennzeichnet,**
**dass** die Sammel-IP-Datenpakete (SP) mittels eines verschlüsselnden Tunneling-Verfahrens auf der Netzwerkschicht des OSI-Referenzmodells übertragen werden.

3. Verfahren nach einem der vorhergehenden Ansprüche,
**dadurch gekennzeichnet,**
**dass** ermittelt wird, welche der Kommunikationsdatenströme ein gemeinsames Übertragungsziel aufweisen, und ein jeweiliges Sammel-IP-Datenpaket (SP) aus IP-Datenpaketen (DP1,...,DP4) von Kommunikationsdatenströmen mit gemeinsamem Übertragungsziel gebildet wird.

4. Verfahren nach einem der vorhergehenden Ansprüche,
**dadurch gekennzeichnet,**
**dass** ein jeweiliges Sammel-IP-Datenpaket (SP) aus innerhalb eines vorgegebenen Zeitintervalls eintreffenden IP-Datenpaketen (DP1,...,DP4) verschiedener Kommunikationsdatenströme gebildet wird.

5. Übertragungseinrichtung (TD) zum verschlüsselten Übertragen von jeweils als Folge von IP-Datenpaketen (DP1,...,DP4) vorliegenden Kommunikationsdatenströmen über ein paketorientiertes Kommunikationsnetz (KN), mit
a) einem Sammelpaketerzeuger (SPE) zum Bilden von internetprotokollgemäßen, jeweils mit einem IP-Paketkopf (HDR) versehenen Sammel-IP-Datenpaketen (SP), die jeweils mehrere IP-Datenpakete (DP1,...,DP4)mit deren jeweiligem Paketkopf enthalten, wobei die enthaltenen IP-Datenpakete (DP1,...,DP4) verschiedenen Kommunikationsdatenströme angehören,
b) einem Verschlüsselungsmodul zum Verschlüsseln von IP-Datenpaketen sowie eines jeweiligen Sammel-IP-Datenpakets (SP), und
c) einer IP-Schnittstelle (IPIF) zum Übertragen der verschlüsselten Sammel-IP-Datenpakete (VSP) über das paketorientierte Kommunikationsnetz (KN).

6. Übertragungseinrichtung nach Anspruch 5,
**dadurch gekennzeichnet,**
**dass** das Verschlüsselungsmodul ein Einkapselmodul (EM) aufweist zum Einkapseln von im Verschlüsselungsmodul verschlüsselten Daten eines ersten IP-Datenpakets in ein zweites IP-Datenpaket (VSP).

7. Übertragungseinrichtung nach Anspruch 5 oder 6, **gekennzeichnet durch**
eine Adressvergleichseinrichtung (AV) zum Ermitteln, welche der Kommunikationsdatenströme ein gemeinsames Übertragungsziel aufweisen, und
einen Sammelpaketerzeuger (SPE) zum Bilden von Sammel-IP-Datenpaketen (SP), die jeweils IP-Datenpakete (DP1,...,DP4) von Kommunikationsdatenströmen mit gemeinsamem Übertragungsziel enthalten.

8. Übertragungseinrichtung nach einem der Ansprüche 5 bis 7,
**gekennzeichnet durch**
einen Zeitgeber (TM) zum Vorgeben eines Zeitintervalls, innerhalb dessen eintreffende IP-Datenpakete (DP1,...,DP4) verschiedener Kommunikationsdatenströme zu einem Sammel-IP-Datenpaket (SP) zusammengefasst werden.

## Claims

1. Method for the encrypted transmission of communication data streams present in each case as a sequence of IP data packets (DP1,...,DP4) via a packet-oriented communication network (KN), wherein
a) collective IP data packets (SP) are formed as Internet Protocol compliant data packets, each provided with an IP packet header (HDR) and each containing a plurality of IP data packets (DP1,...,DP4) with their respective packet header, the IP data packets (DP1,...,DP4) contained therein belonging to different communication data streams,
b) each collective IP data packet (SP) is in each case encrypted by means of an encryption module for encrypting IP data packets and
c) the encrypted collective IP data packets (VSP) are transmitted via the packet-orient communication network (KN).

2. Method according to claim 1,
**characterised in that**
the collective IP data packets (SP) are transmitted by means of an encrypting tunnelling method on the network layer of the OSI reference model.

3. Method according to one of the preceding claims,
**characterised in that**
it is determined which of the communication data streams have a common transmission destination, and in each case a collective IP data packet (SP) is formed from IP data packets (DP1,...,DP4) of communication data streams with a common transmission destination.

4. Method according to one of the preceding claims,
**characterised in that**
a collective IP data packet (SP) is formed in each case from IP data packets (DP1,...,DP4) of different communication data streams that arrive within a specified time interval.

5. Transmission device (TD) for the encrypted transmission of communication data steams present in each case as a sequence of IP data packets (DP1,...,DP4) via a packet-oriented communication network (KN), comprising
a) a collective packet generator (SPE) for forming Internet Protocol compliant collective IP data packets (SP), each provided with an IP packet header (HDR) and each containing a plurality of IP data packets (DP1,...,DP4) with their respective packet header, the IP data packets (DP1,...,DP4) contained therein belonging to different communication data streams,
b) an encryption module for encrypting IP data packets and a collective IP data packet (SP) in each case and
c) an IP interface (IPIF) for transmission of the encrypted collective IP data packets (VSP) via the packet-oriented communication network (KN).

6. Transmission device according to claim 5,
**characterised in that**
the encryption module has an encapsulation module (EM) for encapsulating data of a first IP data packet encrypted in the encryption module into a second IP data packet (VSP).

7. Transmission device according to claim 5 or 6,
**characterised by**
an address comparison device (AV) for determining which of the communication data streams have a common transmission destination and
a collective packet generator (SPE) for forming collective IP data packets (SP), each of which contains IP data packets (DP1,...,DP4) of communication data streams with a common transmission destination.

8. Transmission device according to one of the claims 5 to 7,
**characterised by**
a timer (TM) for setting a time interval within which incoming IP data packets (DP1,...,DP4) of different communication data streams are combined to form a collective IP data packet (SP).

## Revendications

1. Procédé pour la transmission chiffrée de flux de données de communication, se présentant chacun sous forme de suite de paquets de données IP (DP1, ..., DP4), sur un réseau de communication orienté paquet (KN), dans lequel
a) on construit des blocs de paquets de données IP (SP) sous forme de paquets de données conformes au protocole Internet et dotés chacun d'une en-tête de paquet IP (HDR), lesquels blocs contiennent chacun plusieurs paquets de données IP (DP1, ..., DP4) avec leur en-tête de paquet respective, les paquets de données IP (DP1, ..., DP4) contenus appartenant à différents flux de données de communication,
b) on chiffre un bloc de paquets de données IP (SP) respectif grâce à un module de chiffrement destiné à chiffrer des paquets de données IP, et
c) on transmet les blocs de paquets de données IP chiffrés (VSP) sur le réseau de communication orienté paquet (KN).

2. Procédé selon la revendication 1,
**caractérisé en ce que**
on transmet les blocs de paquets de données IP (SP) au moyen d'un procédé de tunnelisation chiffrant sur la couche réseau du modèle de référence OSI.

3. Procédé selon l'une des revendications précédentes,
**caractérisé en ce que**
on détermine lesquels des flux de données de communication ont une destination de transmission commune, et on construit un bloc de paquets de données IP (SP) respectif à partir de paquets de données IP (DP1, ..., DP4) de flux de données de communication ayant une destination de transmission commune.

4. Procédé selon l'une des revendications précédentes,
**caractérisé en ce que**
on construit un bloc de paquets de données IP (SP) respectif à partir de paquets de données IP (DP1, ..., DP4) entrant au cours d'un intervalle de temps prédéfini de différents flux de données de communication.

5. Dispositif de transmission (TD) pour la transmission chiffrée de flux de données de communication, se présentant chacun sous forme de suite de paquets de données IP (DP1, ..., DP4), sur un réseau de communication orienté paquet (KN), comprenant
a) un générateur de blocs de paquets (SPE) destiné à construire des blocs de paquets de données IP (SP) conformes au protocole Internet et dotés chacun d'une en-tête de paquet IP (HDR), lesquels blocs contiennent chacun plusieurs paquets de données IP (DP1, ..., DP4) avec leur en-tête de paquet respective, les paquets de données IP (DP1, ..., DP4) contenus appartenant à différents flux de données de communication,
b) un module de chiffrement destiné à chiffrer des paquets de données IP ainsi qu'un bloc de paquets de données IP (SP) respectif, et
c) une interface IP (IPIF) destinée à transmettre les blocs de paquets de données IP chiffrés (VSP) sur le réseau de communication orienté paquet (KN).

6. Dispositif de transmission selon la revendication 5,
**caractérisé en ce que**
le module de chiffrement comporte un module d'encapsulation (EM) destiné à encapsuler les données chiffrées dans le module de chiffrement d'un premier paquet de données IP dans un deuxième paquet de données IP (VSP).

7. Dispositif de transmission selon la revendication 5 ou 6,
**caractérisé par**
un dispositif de comparaison d'adresses (AV) destiné à déterminer lesquels des flux de données de communication ont une destination de transmission commune, et
un générateur de blocs de paquets (SPE) destiné à construire des blocs de paquets de données IP (SP) contenant chacun des paquets de données IP (DP1, ..., DP4) de flux de données de communication ayant une destination de transmission commune.

8. Dispositif de transmission selon l'une des revendications 5 à 7,
**caractérisé par** une horloge (TM) destinée à prédéfinir un intervalle de temps au cours duquel des paquets de données IP entrant (DP1, ..., DP4) de différents flux de données de communication sont regroupés en un bloc de paquets de données IP (SP).
